**Europäisches Patentamt**

**European Patent Office**

**Office européen des brevets**

(19)

(11) Numéro de publication: **0 023 742**
**B1**

(12) **FASCICULE DE BREVET EUROPEEN**

(45) Date de publication du fascicule du brevet:
**22.08.84**

(51) Int. Cl.³: **G 21 C 19/06**

(21) Numéro de dépôt: **80200705.4**

(22) Date de dépôt: **21.07.80**

(54) **Râtelier de stockage pour des assemblages d'éléments combustibles nucléaires.**

(30) Priorité: **07.08.79 FR 7920239**

(43) Date de publication de la demande:
**11.02.81 Bulletin 81/6**

(45) Mention de la délivrance du brevet:
**22.08.84 Bulletin 84/34**

(84) Etats contractants désignés:
**DE GB NL SE**

(56) Documents cités:
**DE - A - 2 629 938**
**DE - A - 2 700 520**
**FR - A - 2 404 284**
**NL - A - 7 707 041**
**US - A - 4 006 362**
**US - A - 4 096 392**
**US - A - 4 143 277**

(73) Titulaire: **Schlumpf, Raymond Jacques, 18 Rue du Fort Debout, B-7630 Brunehaut-Hollain (BE)**

(72) Inventeur: **Schlumpf, Raymond Jacques, 18 Rue du Fort Debout, B-7630 Brunehaut-Hollain (BE)**

(74) Mandataire: **Plucker, Guy et al, OFFICE KIRKPATRICK 4 Square de Meeûs, B-1040 Bruxelles (BE)**

# Description

La présente invention concerne un râtelier de stockage pour des assemblages d'éléments combustibles nucléaires.

Il est bien connu que les réacteurs nucléaires contiennent des assemblages d'éléments combustibles disposés dans la cuve du réacteur suivant une configuration appropriée. Des éléments combustibles sont généralement des tubes d'acier remplis de pastilles du combustible nucléaire proprement dit. Ces éléments combustibles qui ont habituellement un diamètre compris entre 0,6 et 2 cm et une longueur comprise entre 2 et 5,5 m, sont groupés en des «assemblages» qui comprennent généralement au moins plusieurs dizaines d'éléments combustibles disposés en faisceau, parallèlement les uns aux autres. Les assemblages d'éléments combustibles se présentent habituellement, dans leur ensemble, comme des structures prismatiques à section carrée ou hexagonale.

On sait également qu'après une certaine période de fonctionnement du réacteur, le combustible irradié doit en être retiré pour être remplacé par du combustible neuf.

Ce combustible usé est fortement radio-actif et produit une chaleur considérable. Il contient en effet une quantité résiduelle du matériau combustible initial et également de nombreux produits de fission radio-actifs.

Il importe dès lors de disposer d'une installation de stockage appropriée pour entreposer les assemblages d'éléments combustibles qui ont été retirés du réacteur, jusqu'à ce qu'ils soient soit réutilisés soit évacués de la centrale vers un lieu d'entreposage définitif ou vers un autre lieu de stockage.

Plusieurs types d'installation de stockage ont déjà été proposés et utilisés à ce jour.

En règle générale, une telle installation consiste en un ou plusieurs «râteliers» déposés en une enceinte adéquate (par exemple dans une piscine remplie d'eau déminéralisée ou d'eau boriquée ou dans une enceinte refroidie par circulation d'un gaz ou d'un autre fluide approprié). Le râtelier est composé de «cellules» pouvant chacune recevoir et maintenir un assemblage d'éléments combustibles. L'eau joue à la fois le rôle d'agent de refroidissement et de blindage antiradiation. Le composé de bore qui peut être dissous dans l'eau de la piscine, sert comme «poison neutronique» absorbant les neutrons.

On connait notamment un râtelier de stockage pour des assemblages d'éléments combustibles (assemblages de section carrée) dans lequel chaque cellule est simplement constituée par quatre cornières disposées aux quatre coins de la cellule; toutes les cornières que comporte le râtelier sont maintenues en place en étant assemblées à une série de traverses disposées entre les cellules.

On connait également un râtelier de stockage composé de tubes d'acier dont la section correspond à la forme des assemblages combustibles qu'ils doivent contenir, ces tubes d'acier étant entretoisés et solidarisés entre eux en étant fixés par leurs parties supérieures et inférieures à des plaques pourvues de trous de dimensions appropriées, régulièrement espacées.

D'autres types de râteliers de stockage sont composés de tubes d'acier analogues aux précédents, entretoisés et réunis les uns aux autres en étant fixés à des traverses métalliques disposées en divers endroits entre les rangées de cellules.

On notera que dans tous ces râteliers de stockage, les cellules sont espacées les unes des autres. Il importe en effet de veiller à ce que les assemblages combustibles soient séparés par une distance suffisante pour éviter un agencement critique du combustible nucléaire.

Il est vrai qu'on a également décrit des râteliers de stockage formés de cellules de stockage adjacentes disposées en damier. Toutefois, dans de telles installations de stockage, les assemblages d'éléments combustibles usés ne peuvent être entreposés que dans une cellule sur deux.

Le DE-A-2 700 520 décrit un râtelier de stockage, destiné à être disposé dans un bassin de stockage, constitué de plusieurs conteneurs allongés de section uniforme, lesdits conteneurs étant espacés et reliés entre eux de façon à délimiter des espaces entre les conteneurs adjacents pour y introduire des panneaux absorbeurs de neutrons. De manière plus spécifique, ce brevet décrit un râtelier composé de paires de cellules dont chaque cellule, de section carrée, comporte une bride longitudinale dépassant latéralement un de ses coins. Grâce à la bride que comporte chaque cellule, la paire de cellules peut être assemblée par soudage tout en ménageant un espace entre les deux cellules. Par ailleurs, un espace est également ménagé entre les paires de cellules que comporte le râtelier. Ces paires de cellules sont solidarisées entre elles par le fait que leur extrémité inférieure est soudée à une plaque de base et que leur partie supérieure est soudée à une ceinture métallique qui les entoure. Ce brevet allemand décrit également des râteliers de stockage analogues mais composés de rangées composées de plusieurs cellules assemblées entre elles. Ces rangées de cellules sont espacées des rangées voisines grâce à des brides, prévues à cet effet, portées par les cellules extrêmes de chaque rangée.

Le NL-A-7 707 041 concerne la réalisation d'un râtelier de stockage pour des combustibles nucléaires usés, qui est composé d'un nombre de chambres de section carrée formées chacune de deux tôles ayant un profil en Z. Ces tôles de profil en Z sont réalisées en un matériau neutrophage, de préférence en un acier inoxydable au bore, et sont assemblées entre elles au moyen de tirants, douilles d'espacement et plaques d'ancrage de manière à former un râtelier de stockage complet.

Le DE-A-2 629 938 décrit un râtelier de stockage composé de cellules indépendantes réalisées en tôle d'acier au bore, cintrées de manière à ménager des coins arrondis ou lobes. Les cellules sont maintenues en place grâce à une ossature formée d'une plaque de base, d'une plaque de couverture et de montants reliant lesdites plaques entre elles.

En fait, les installations de stockage d'assemblages combustibles usés doivent répondre à de nombreux critères très sévères, concernant notamment leur robustesse et la précision de leurs dimensions, la sécurité et la facilité de leur emploi. Ces critères, imposés par les maîtres d'œuvre, tendant d'ailleurs à devenir de plus en plus sévères.

La présente invention a pour but de réaliser un râtelier de stockage pour des assemblages combustibles, qui répond de manière optimale à ces divers critères et qui permet en particulier de réduire l'encombrement des installations de stockage, tout en évitant la criticité des assemblages combustibles.

Un autre but de l'invention est de réaliser un râtelier de stockage conçu de manière telle que le blindage neutronique entre cellules voisines peut être aisément modifié en fonction de la réactivité des assemblages combustibles qui y sont stockés.

Un autre but de l'invention est de réaliser un râtelier de stockage suffisamment robuste pour résister notamment à des séismes, chutes d'avions, tornades et missiles, ce râtelier ne comportant cependant pas de traverses entre les rangées de cellules, cette structure de râtelier permettant notamment d'insérer, de manière simple et efficace, des éléments de blindage neutronique entre les cellules voisines.

Un autre but de l'invention est de réaliser un râtelier pour le stockage à très haute densité, en construisant les parois des cellules elles-mêmes en un matériau constituant un bon blindage neutronique, tel que, notamment, des tôles faites en un acier ayant une teneur en matériau neutrophage (par exemple le bore ou le cadmium) assez élevée ou des tôles d'acier revêtues d'une couche de composé neutrophage comme, par exemple, le carbure de bore.

L'invention vise donc essentiellement à réaliser un râtelier de stockage qui répond simultanément et de manière optimale aux divers objectifs énumérés ci-dessus.

La présente invention a pour objet un râtelier de stockage pour des assemblages combustibles nucléaires de section polygonale pouvant être disposé dans une enceinte de stockage et composé de plusieurs cellules de stockage, consistant en des tuyaux ayant une section adaptée à celles desdits assemblages, placées les unes à côté des autres suivant une disposition régulière formée de rangées parallèles de cellules. Un espacement est ménagé entre les parois des cellules voisines, chaque cellule étant composée d'une ou plusieurs tôles rectangulaires pliées et/ou soudées de manière à former un tuyau ayant des parois disposées suivant une surface prismatique et étant munie à sa partie inférieure d'une assise pouvant supporter un assemblage combustible nucléaire. Les tôles qui forment les cellules s'écartent vers l'extérieur de ladite surface prismatique en au moins deux endroits de son pourtour, et forment à ces endroits des rebords contre lesquels sont appliquées et fixées des cellules voisines. Un ou plusieurs des rebords dont sont munies les cellules sont situés chacun à la jonction de deux faces voisines d'une cellule formée par le pliage d'une même tôle. La zone de jonction entre ces deux faces voisines comporte un lobe dirigé vers l'extérieur de la cellule jusqu'à une cellule voisine. L'ensemble des cellules directement assemblées entre elles par des moyens connus en soi forme une structure autoportante dans laquelle chaque cellule est solidarisée avec les cellules les plus proches de sa propre rangée de cellules et des rangées voisines.

Un ou plusieurs des rebords dont sont munies les cellules, peuvent être situés chacun le long d'une arête verticale ou deux pans de tôle qui forment des faces voisines d'une cellule sont raccordés par soudure, un de ces pans de tôle formant un desdits rebords en se prolongeant, au-delà de la ligne de soudure, jusqu'à une cellule voisine.

Un ou plusieurs des rebords dont sont munies les cellules peuvent être situés chacun à la jonction de deux faces voisines d'une cellule, formées par deux pans de tôle raccordés par soudure, un premier pan de tôle se prolongeant au-delà de l'arête de ladite surface prismatique, jusqu'à une cellule voisine, le bord du deuxième pan de tôle étant plié à grand rayon de courbure vers l'extérieur de la cellule, rejoignant ainsi le bord du premier pan de tôle, les bords des deux pans de tôle étant raccordés par soudure.

L'invention s'applique notamment à des râteliers de stockage composés de cellules qui sont faites pour contenir des assemblages combustibles nucléaires de section carrée. Dans ce cas, chaque cellule consiste en un tuyau ayant des parois disposées suivant les faces latérales d'un prisme droit à base carrée.

Selon une forme particulière de l'invention, ces cellules de section carrée sont composées chacune de deux cornières de tôle, assemblées entre elles par soudure, chacune de ces deux cornières ayant une paire d'ailes d'égale longueur, une des deux cornières ayant toutefois des ailes plus longues que celles de l'autre cornière; ces ailes les plus longues se prolongent ainsi, au-delà de la ligne de soudure, jusqu'à une cellule voisine.

Ces cellules de section carrée peuvent également être composées chacune de deux cornières de tôle identiques, assemblées entre elles par soudure, ces cornières ayant chacune une aile plus longue que l'autre; ces ailes les plus longues se prolongent au-delà de la ligne de soudure, jusqu'à une cellule voisine.

Lorsque, comme décrit ci-dessus, les cellules sont composées chacune de deux cornières de tôle (identiques ou différentes), chacune de ces cornières est réalisée en pliant une tôle rectangulaire de manière que la zone de jonction entre les deux ailes de la cornière comporte un lobe dirigé vers l'extérieur.

Selon une forme particulière de l'invention, chaque cellule de section carrée est composée:

d'un profilé de tôle ayant une section en forme de U, formant trois faces de la cellule, les zones de jonction entre ces faces comportant un lobe dirigé vers l'extérieur de la cellule jusqu'à une cellule voisine, et

d'une tôle plane soudée entre les ailes libres dudit profilé en U, formant la quatrième face de la cellule, chaque aile du profilé en U se prolongeant, au-delà de la ligne de soudure, jusqu'à une cellule voisine.

Ces cellules de section carrée peuvent également être composées chacune d'une seule tôle pliée de manière à former les quatre faces de la cellule, chaque zone de pliage comportant un lobe dirigé vers l'extérieur de la cellule jusqu'à une cellule voisine, la soudure étant faite à une des arêtes verticales de la cellule, un des deux pans de tôle raccordés par cette soudure se prolongeant au-delà de la ligne de soudure jusqu'à une cellule voisine.

Divers types de tôle d'acier peuvent être utilisés pour réaliser les râteliers de stockage suivant l'invention.

Un des avantages importants fournis par l'invention réside dans le fait qu'elle permet d'utiliser des tôles qui ne supportent pas d'être pliées suivant un petit rayons de courbure. Cela permet en particulier d'utiliser des tôles d'acier ayant une teneur en bore assez élevée (par exemple entre 0,8 et 1,5%); de telles tôles sont très avantageuses comme blindage neutronique.

On peut également utiliser des tôles d'acier inoxydable recouvertes d'une couche de composé de bore, comme par exemple le carbure de bore. Le recouvrement des tôles peut se faire suivant des techniques connues en soi et peut être fait avant ou après le pliage des tôles. Lorsque le recouvrement des tôles est effectué avant leur pliage, il est généralement nécessaire de plier les tôles suivant un rayon de courbure assez grand (d'où la nécessité de former un lobe dans la zone de pliage).

L'invention permet de réaliser des râteliers de stockage à très haute densité, surtout lorsque les cellules sont faites de tôles d'acier au bore ou de tôle d'acier revêtues de bore. La présente invention permet d'ailleurs de réaliser des râteliers de stockage dans lesquels l'espacement entre les cellules est encore davantage réduit. La structure des râteliers de stockage suivant l'invention permet en effet de placer un blindage neutronique additionnel dans les espaces entre les parois de cellules voisines. De cette manière, on peut éviter la criticité des assemblages, même si l'intervalle entre les cellules est très réduit. Divers types de matériaux de blindage, connus en soi, peuvent être utilisés pour former le blindage additionnel. La plupart de ces matériaux de blindage ont une forte teneur en bore. Le bore (principalement l'isotope $B^{10}$) est en effet très intéressant car il a un haut pouvoir d'absorption des neutrons.

Pour former un blindage neutronique additionnel entre les cellules, on peut utiliser notamment des plaques rigides, telles que des plaques en carbure de bore fritté ou des tôles en acier à forte teneur en bore, ou des tôles recouvertes de carbure de bore. On peut également utiliser d'autres matériaux connus et notamment des feuilles souples composites, réalisées par la cuisson d'un agglomérat de fibres de verre et de carbure de bore. On connaît également des feuilles de néoprène chargé de carbure de bore, entièrement revêtues de feuilles d'acier inoxydable.

Les plaques ou feuilles constituant le blindage additionnel peuvent être fixées, dans les espaces entre les cellules, par tout moyen connu. Une manière de procéder très avantageuse consiste à accrocher le haut de ces plaques ou feuilles aux extrémités supérieures des rebords dont sont munies les cellules.

Les plaques ou feuilles qui forment le blindage additionnel peuvent éventuellement être fixées à demeure.

En général, il est cependant préférable que les plaques ou feuilles formant le blindage additionnel, soient fixées de manière amovible. De cette manière, on peut à volonté remplacer un type de blindage par un autre ou modifier, selon les besoins, la disposition des plaques de blindage dans le râtelier. Il est en effet à noter qu'il n'est pas toujours nécessaire de placer des plaques de blindage dans tous les intervalles entre cellules. Le nombre et la disposition des plaques de blindage peuvent être modifiés en fonction de la réactivité des assemblages combustibles entreposés, et cette réactivité dépend du type d'assemblage. La fixation amovible des plaques de blindage permet de ne les placer qu'aux endroits ou elles sont nécessaires, ce qui est très avantageux car les matériaux de blindage sont fort coûteux.

Suivant un mode de réalisation particulier et très avantageux, les plaques ou feuilles de blindage additionnel sont fixées de manière amovible mais un dispositif spécial est prévu pour que leur manipulation ne soit possible qu'à l'aide d'un outil ou élément d'outil qui n'est détenu que par l'agence d'inspection responsable de la sécurité. D'autres caractéristiques et avantages de l'invention ressortiront de la description, donnée à titre d'exemples non limitatifs, de quelques formes de réalisation particulières de l'invention, référence étant faite aux dessins annexés, dans lesquels:

la fig. 1 est une vue en perspective cavalière (avec arrachements) d'un râtelier de stockage;

la fig. 2 est une vue en plan du même râtelier;

la fig. 3 est une vue de détail, à plus grande échelle, montrant la structure de la partie supérieure des cellules de stockage du râtelier montré à la fig. 1;

la fig. 4 montre, à grande échelle, la structure d'une assise montée dans la partie inférieure d'une cellule et fixée sur un longeron d'ancrage du râtelier; ce détail de construction est montré en coupe verticale, suivant la ligne IV–IV de la fig. 2;

la fig. 5 est une coupe horizontale (suivant ligne VI–VI de la fig. 6) d'une cellule de stockage conforme à l'invention;

la fig. 6 est une coupe verticale interrompue (suivant la ligne VII–VII de la fig. 5) de la cellule montrée à la fig. 5;

les figs 7 à 9 montrent respectivement trois autres formes de cellules de stockage suivant l'invention;

la fig. 10 est une vue schématique en plan montrant la manière dont des cellules du type illustré à la fig. 5 sont assemblées pour former un râtelier;

la fig. 11 montre de manière analogue un assemblage de cellules du type illustré à la fig. 9;

la fig. 12 montre un détail de construction suivant une variante des cellules montrées aux figs 5 à 9.

Sur toutes ces figures, des éléments identiques ou analogues sont désignés par les mêmes chiffres de référence.

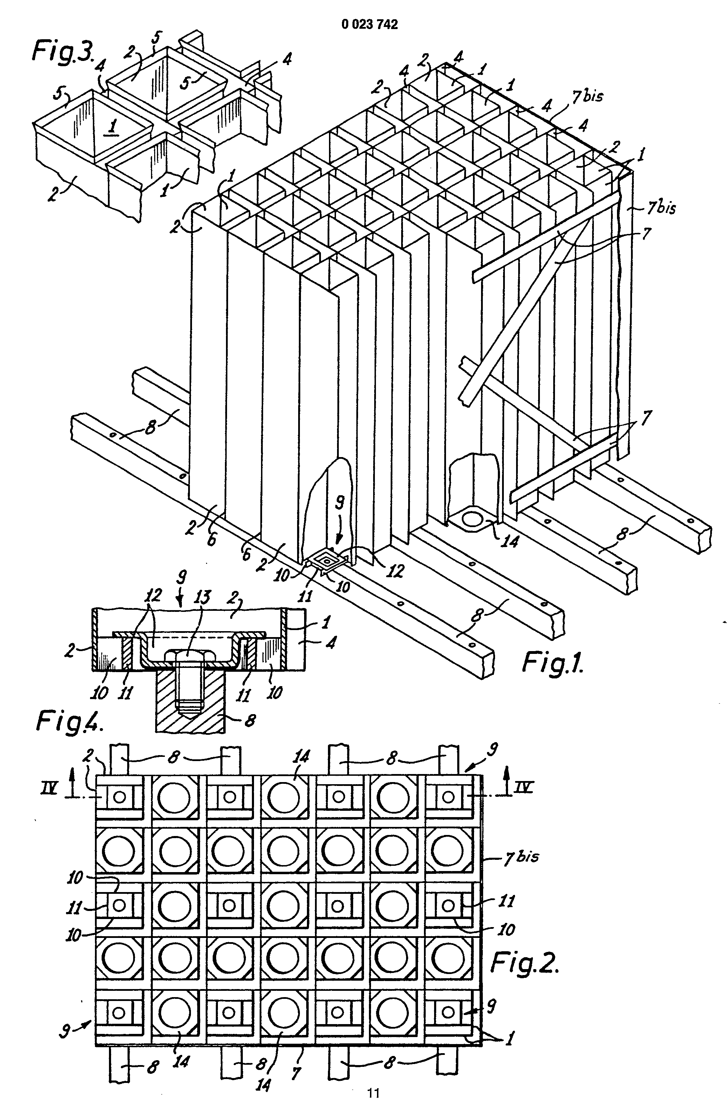

Le râtelier de stockage montré aux figs 1 et 2, est composé de cellules de stockage pour des assemblages combustibles nucléaires de section carrée.

Comme montré à la fig. 1, chacune de ces cellules est composée d'une première cornière de tôle 1 et d'une seconde cornière de tôle 2. Les cornières 1 et 2 ont chacune une paire d'ailes d'égale longueur, mais les ailes de la cornière 2 sont plus longues que celles de la cornière 1. Ces cornières 1 et 2 sont réunies entre elles par des soudures 3, de manière à former un tuyau de section carrée. Les ailes de la cornière 2 se prolongent au-delà de la ligne de soudure 3 en formant ainsi, à l'extérieur de la cellule, deux rebords désignés par le chiffre de référence 4. C'est évidemment la longueur des ailes de la cornière 1 qui détermine la largeur des parois latérales de la cellule, tandis que la longueur des rebords 4 (différence entre la longueur d'une aile de la cornière 2 et la longueur d'une aile de la cornière 1) détermine l'intervalle entre les cellules voisines.

Chacune des cornières 1 et 2 est formée par pliage d'une tôle rectangulaire en acier. L'épaisseur de la tôle sera, par exemple, de l'ordre de 5 mm. Le pliage de ces tôles est généralement fait suivant un rayon de courbure très petit (généralement de l'ordre de quelques millimètres). Ce rayon de courbure est en fait dépendant de la section des assemblages combustibles qui doivent être entreposés dans les cellules. La nécessité de plier les tôles suivant un rayon de courbure très petit, impose l'utilisation de tôles faites en acier assez malléable.

Comme montré à la fig. 3, chaque cellule comporte à son extrémité supérieure une partie évasée 5, formée de quatre petites bandes de tôle soudées contre le bord supérieur des cornières 1 et 2. Ces quatre petites bandes de tôle, raccordées entre elles par soudure, sont inclinées par rapport à la verticale, vers l'extérieur de la cellule. La partie évasée 5 est destinée à faciliter l'introduction des assemblages combustibles dans les cellules. Dans un but de simplification, la partie évasée 5 des cellules n'est pas montrée à la fig. 1.

Le râtelier de stockage est réalisé en assemblant, par des soudures 6, des cellules, disposées côte-à-côte suivant la même orientation, en plusieurs rangées successives. Chaque soudure 6 raccorde l'extrémité d'un rebord 4 avec l'arête de la cornière 2 d'une cellule voisine. On comprendra que cet assemblage se fait cellule après cellule et rangée après rangée, de manière à toujours avoir accès, lors de l'assemblage, aux endroits où doivent être faites les soudures 6.

Lorsqu'un râtelier complet est ainsi réalisé, deux de ses faces latérales sont formées par des ailes de cornières 2, soudées dans le prolongement les unes des autres.

Le long des deux autres faces latérales du râtelier, des rebords 4 dépassent des parois de cellule formées par des cornières 1. Pour renforcer la rigidité du râtelier, ces rebords 4 peuvent être raccordés entre eux par des traverses métalliques 7 ou par des tôles 7bis auxquels ils sont soudés. Les figs 1 et 2 montrent en même temps ces deux variantes de réalisation.

Le râtelier de stockage repose et est ancré sur des longerons 8 qui sont eux-mêmes ancrés sur le fond de la piscine de stockage.

On remarquera que, dans l'exemple de réalisation montré aux figs 1 et 2, seulement une rangée de cellules sur deux repose sur un longeron 8.

Chaque cellule est munie à sa partie inférieure d'une assise pouvant supporter un assemblage combustible. Ces assises sont cependant de deux types différents.

Parmi les cellules qui reposent directement sur un longeron 8, certaines sont munies d'une assise qui permet en même temps d'ancrer la cellule sur le longeron 8; de telles assises sont désignées, dans leur ensemble, par le chiffre de référence 9.

Cette assise 9 comporte deux lattes d'acier 10 disposées parallèlement l'une à l'autre, et soudées par leurs extrémités à la partie inférieure de deux parois opposées de la cellule. Entre ces lattes 10 et perpendiculairement à celles-ci, sont soudées deux lattes d'acier 11 plus courtes. Les deux lattes 10 et les deux lattes 11 forment ensemble un cadre qui sert d'appui à une pièce d'ancrage 12 qui a la forme d'une cuvette à fond plat pourvue à sa partie supérieure d'un rebord horizontal qui est dirigé vers l'extérieur. Le fond de cette cuvette repose sur un longeron 8 et est ancré contre celui-ci au moyen d'une grosse vis 13 passant par un trou ménagé au centre de la pièce d'ancrage 12 et s'engageant dans un trou fileté du longeron 8. Le rebord de la partie supérieure de la pièce d'ancrage 12 est au contact de la partie supérieure du cadre formé par les lattes 10 et 11 sans toutefois exercer une pression sur ce cadre. Ce montage assure un très bon ancrage du râtelier sur les longerons 8, tout en permettant un léger déplacement horizontal dudit cadre par rapport à la pièce d'ancrage 12, rendant ainsi possible la dilatation thermique du râtelier.

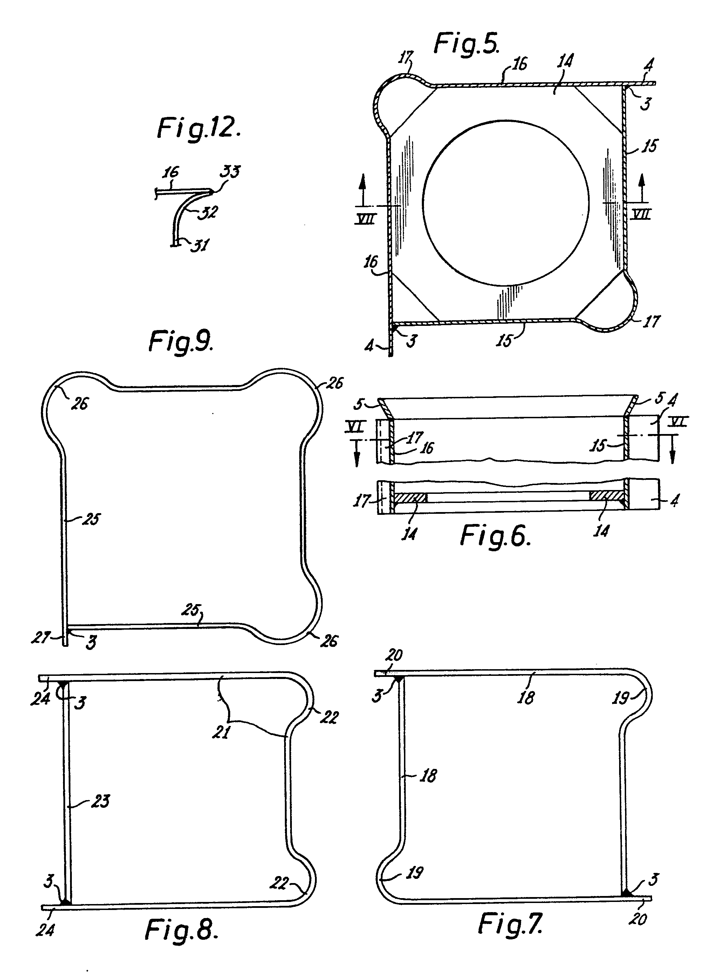

Certaines des cellules qui reposent directement sur un longeron 8, et toutes les cellules qui ne se trouvent pas à la verticale d'un longeron 8, sont munies, à leur partie inférieure, d'une assise 14 qui consiste en une pièce de grosse tôle, de forme octogonale, munie en son centre d'une grande ouverture circulaire. Cette assise 14 est soudée, par quatre de ses côtés, aux parois de la cellule. La forme et la disposition de l'assise 14, sont montrées avec plus de détail aux figs 5 et 6 (qui montrent cependant une cellule d'un autre type).

Le râtelier montré aux figs 1 et 2 est de construction très robuste. On remarquera pourtant que ce râtelier ne comporte pas de traverses entre les rangées de cellules. De ce fait, les intervalles entre cellules voisines restent entièrement libres, ce qui permet d'y introduire des plaques ou feuilles de blindage additionnel (comme il a été expliqué plus haut). Ces plaques ou feuilles de blindage additionnel sont de préférence accrochées à la partie supérieure des rebords 4 qui relient les cellules entre elles.

Un râtelier de stockage tel qu'illustré aux figs 1 à 4, ne peut normalement être réalisé qu'en utilisant, pour la construction des cellules, des tôles assez malléables. En fait, on peut également réaliser un tel râtelier avec des tôles plus fragiles, si les cornières 1 et 2 sont formées en assemblant par soudage deux tôles planes.

Lorsqu'on désire construire un râtelier avec des tôles peu malléables (notamment avec des tôles d'acier à teneur élevée en bore), il est généralement préférable de le réaliser suivant l'invention et notamment suivant les formes d'exécution illustrées aux figs 5 à 11.

Les figs 5 et 6 montrent une cellule de stockage qui, dans son ensemble, est assez semblable à la cellule montrée à la fig. 1. Cette cellule de stockage (figs 5 et 6) consiste essentiellement en un tuyau formé par l'assemblage (par des soudures 3) de deux profilés de tôle 15 et 16. Ces profilés 15 et 16 sont assez semblables aux cornières 1 et 2. Chaque profilé 15 ou 16 est formé par pliage d'une tôle rectangulaire, et comporte deux ailes d'égale longueur disposées perpendiculairement l'une à l'autre. Toutefois, la zone de jonction entre ces deux ailes, comporte un lobe 17 dirigé vers l'extérieur de la cellule. Cette forme en lobe permet de plier la tôle suivant un grand rayon de courbure, tout en ménageant à l'intérieur de la cellule l'espace nécessaire pour l'assemblage combustible à entreposer. On peut considérer que chaque lobe 17 contourne en quelque sorte une arête verticale de l'assemblage combustible.

Quant au reste, les râteliers construits avec de telles cellules (figs 5 et 6) sont en tout point semblables au râtelier montré aux figs 1 à 4.

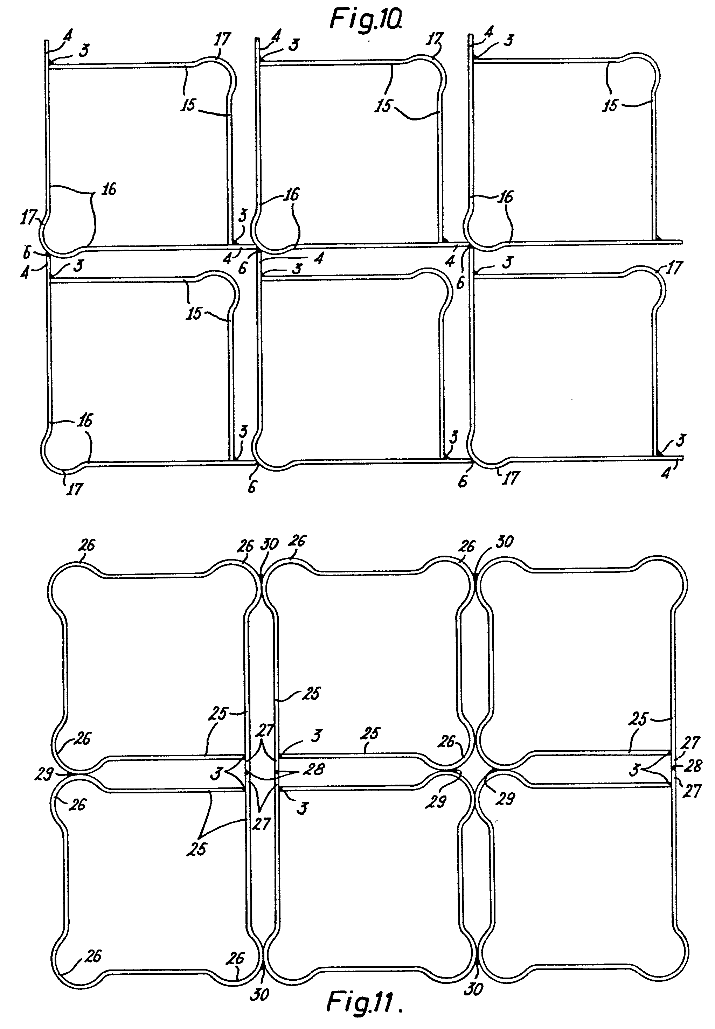

La fig. 10 montre schématiquement comment de telles cellules (figs 5 et 6) sont assemblées entre elles pour former un râtelier. On peut voir que cet assemblage est analogue à celui des cellules qui composent le râtelier montré aux figs 1 et 2.

La fig. 7 montre schématiquement une cellule de stockage qui consiste essentiellement en un tuyau formé par l'assemblage (par des soudures 3) de deux profilés de tôle 18 identiques. Chaque profilé 18 est formé par pliage d'une tôle rectangulaire, et comporte deux ailes de longueur inégale, disposées perpendiculairement l'une à l'autre. La zone de jonction entre ces deux ailes comporte un lobe 19 dirigé vers l'extérieur de la cellule. L'aile la plus longue de chaque profilé 18 se prolonge au-delà de la ligne de soudure 3, en formant à l'extérieur de la cellule un rebord 20.

Des cellules comme celle montrée à la fig. 7, peuvent être assemblées entre elles (par soudure) en disposant les cellules de telle manière que chaque petite aile d'une cellule se trouve en face d'une grande aile d'une cellule voisine.

La fig. 8 montre schématiquement une cellule de stockage composée (a) d'un profilé de tôle 21 ayant une section en U, formant trois faces latérales de la cellule; les zones de jonction entre ces faces comportent un lobe 22 dirigé vers l'extérieur de la cellule, et (b) d'une tôle plane 23 (formant la quatrième face de la cellule) fixée par des soudures 3 entre les ailes du profilé de tôle 21. Chaque aile du profilé 21 se prolonge, au-delà d'une ligne de soudure 3, en formant à l'extérieur de la cellule un rebord 24.

Des cellules comme celle montrée à la fig. 8 peuvent être assemblées entre elles (par soudure) en orientant les cellules de telle manière que chaque cellule soit tournée de 90° par rapport à chaque cellule voisine.

La fig. 9 montre schématiquement une cellule composée d'une seule tôle 25 pliée et soudée de manière à former les quatre faces de la cellule. Chaque zone de pliage comporte un lobe 26 dirigé vers l'extérieur de la cellule. La soudure 3 est faite à une des arêtes verticales de la cellule. Un des deux pans de tôle raccordés par cette soudure 3, se prolonge au-delà de la ligne de soudure, en formant à l'extérieur de la cellule un rebord 27.

La fig. 11 montre schématiquement comment de telles cellules (fig. 9) sont assemblées entre elles pour former un râtelier de stockage. Les cellules sont d'abord assemblées par paires, au moyen de soudures 28 et 29. Les paires de cellules sont alors assemblées entre elles par des soudures 30.

La fig. 12 montre un détail de construction d'une cellule de stockage qui peut être considérée comme une variante de celle montrée à la fig. 5. Suivant cette variante de construction, la cellule est composée d'une première cornière 16 (identique à la cornière 16 de la cellule montrée à la fig. 5) et d'une seconde cornière 31, analogue à la cornière 15 (de la cellule montrée à la fig. 5) mais comportant à l'extrémité de chacune de ses ailes un pli à grand rayon de courbure 32 dirigé vers l'extérieur de la cellule. L'extrémité de chaque aile de la cornière 31 rejoint ainsi l'extrémité d'une aile de la cornière 16. Les deux bords de tôle sont raccordés par une soudure 33. Cette soudure 33 peut simultanément raccorder ce rebord de la cellule au lobe 17 de la cornière 16 de la cellule voisine.

On comprendra que des cellules analogues à celles montrées aux figs 7 à 9 peuvent également être réalisées suivant la variante de construction illustrée à la fig. 12.

Il doit être entendu que la fig. 12 n'est qu'une vue fragmentaire (en plan) et ne montre que l'extrémité d'une aile de cornière (31) raccordée à l'extrémité d'une aile de l'autre cornière (2 ou 16).

Les pièces d'ancrage 12, montrées aux figs 1 et 2, ne sont indiquées qu'à titre d'exemple et des systèmes d'ancrage différents peuvent également être utilisés. Suivant un mode d'exécution particulier, le râtelier suivant l'invention n'est d'ailleurs pas ancré sur le fond de la piscine de stockage, mais repose seulement sur des pièces d'appui qui assurent un espacement entre la partie inférieure des cellules et le fond de la piscine. Dans ce cas, on peut assurer la retenue aux déplacements latéraux par tout système connu en soi, par exemple des amortisseurs montés entre les faces latérales du râtelier et les parois latérales de la piscine.

Il importe également de noter que l'invention a été décrite plus particulièrement en se référant à des râteliers pour le stockage d'assemblages combustibles de section carrée. La présente invention couvre cependant également des râteliers de stockage pour des assemblages combustibles ayant une autre section polygonale (par exemple, triangulaire ou hexagonale). De tels râteliers peuvent être réalisés suivant l'invention de manière analogue à ce qui est décrit ci-dessus.

**Revendications**

1. Râtelier de stockage pour des assemblages combustibles nucléaires de section polygonale pouvant être disposé dans une enceinte de stockage et composé de plusieurs cellules de stockage, consistant en des tuyaux ayant une section adaptée à celle desdits assemblages, placées les unes à côté des autres suivant une disposition régulière formée de rangées parallèles de cellules, un espacement étant ménagé entre les parois des cellules voisines, chaque cellule étant composée d'une ou plusieurs tôles rectangulaires pliées et/ou soudées de manière à former un tuyau ayant des parois disposées suivant une surface prismatique et étant munie à sa partie inférieure d'une assise (8, 14) pouvant supporter un assemblage combustible nucléaire, les tôles qui forment les cellules s'écartant vers l'extérieur de ladite surface prismatique en au moins deux endroits de son pourtour, en formant à ces endroits des rebords (4, 26) contre lesquels sont appliquées et fixées des cellules voisines, un ou plusieurs desdits rebords dont sont munies les cellules étant situés chacun à la jonction de deux faces voisines d'une cellule, caractérisé en ce que les deux faces voisines sont formées par le pliage d'une même tôle, la zone de jonction entre ces deux faces voisines comportant un lobe (17, 19, 22, 26) dirigé vers l'extérieur de la cellule jusqu'à une cellule voisine, l'ensemble des cellules directement assemblées entre elles par des moyens connus en soi, formant une structure autoportante dans laquelle chaque cellule est solidarisée avec les cellules les plus proches de sa propre rangée de cellules et des rangées voisines.

2. Râtelier de stockage suivant la revendication 1, caractérisé en ce qu'un ou plusieurs desdits rebords dont sont munies les cellules sont situés chacun le long d'une arête verticale où deux pans de tôle qui forment des faces voisines d'une cellule, sont raccordés par soudure, un de ces pans de tôle formant un desdits rebords en se prolongeant, au-delà de la ligne de soudure, jusqu'à une cellule voisine.

3. Râtelier de stockage suivant la revendication 1, caractérisé en ce qu'un ou plusieurs desdits rebords dont sont munies les cellules sont situés chacun à la jonction de deux faces voisines d'une cellule, formées par deux pans de tôle raccordés par soudure, un premier pan de tôle (16) se prolongeant au-delà de l'arête de ladite surface prismatique, jusqu'à une cellule voisine, le bord du deuxième pan de tôle (31) étant plié à grand rayon de courbure vers l'extérieur de la cellule, rejoignant ainsi le bord du premier pan de tôle, les bords des deux pans de tôle étant raccordés par soudure (33).

4. Râtelier de stockage suivant l'une quelconque des revendications précédentes, caractérisé en ce que lesdites cellules sont faites pour contenir des assemblages combustibles nucléaires de section carrée, chaque cellule consistant en un tuyau ayant des parois disposées suivant les faces latérales d'un prisme droit à base carrée.

5. Râtelier de stockage suivant la revendication 4, caractérisé en ce que chaque cellule est composée de deux cornières de tôle (15, 16) assemblées entre elles par soudure, chacune de ces deux cornières ayant une paire d'ailes d'égale longueur, une des deux cornières ayant toutefois des ailes plus longues que celles de l'autre cornière, ces ailes les plus longues se prolongeant ainsi, au-delà de la ligne de soudure, jusqu'à une cellule voisine.

6. Râtelier de stockage suivant la revendication 4, caractérisé en ce que chaque cellule est composée de deux cornières de tôle identiques (18) assemblées entre elles par soudure et ayant chacune une aile plus longue que l'autre, ces ailes les plus longues se prolongeant ainsi, au-delà de la ligne de soudure, jusqu'à une cellule voisine.

7. Râtelier de stockage suivant la revendication 4, caractérisé en ce que chaque cellule est composée:

d'un profilé de tôle (21) ayant une section en forme de U, formant trois faces de ladite cellule, les zones de jonction entre ces faces comportant un lobe (22) dirigé vers l'extérieur de la cellule jusqu'à une cellule voisine, et

d'une tôle plane (23) soudée entre les ailes dudit profilé en U, formant la quatrième face de ladite cellule, chaque aile du profilé en U se prolongeant, au-delà de la ligne de soudure, jusqu'à une cellule voisine.

8. Râtelier de stockage suivant la revendication 4, caractérisé en ce que chaque cellule est composée d'une seule tôle (25) pliée de manière à former les quatre faces de la cellule, chaque zone de pliage comportant un lobe (26) dirigé vers l'extérieur de la cellule jusqu'à une ou plusieurs cellules voisines, la soudure (3) étant faite à une des arêtes verticales de la cellule, un des deux pans de tôle raccordés par cette soudure se prolongeant au-delà de la ligne de soudure jusqu'à une cellule voisine.

9. Râtelier de stockage suivant l'une quelconque des revendications précédentes, caractérisé en ce que les cellules qui le composent, sont faites de tôles en acier inoxydable au bore.

10. Râtelier de stockage suivant l'une quelconque des revendications précédentes, caractérisé en ce que les cellules qui le composent sont faites de tôles en acier inoxydable, recouvertes d'une couche d'un composé neutrophage.

11. Râtelier de stockage suivant l'une quelconque des revendications précédentes, caractérisé en ce que des plaques, feuilles ou écrans analogues, faits en un matériau neutrophage, sont placés de manière amovible dans les espaces entre les parois de cellules voisines ou dans certains de ces espaces.

**Claims**

1. Storage rack for nuclear fuel element assemblies of polygonal cross-section, which can be disposed in a storage area and which is composed of several storage cells consisting of hollow stems having a cross-section adapted to that of the said assemblies, placed one beside the other in a regular pattern of parallel rows, a spacing being provided between the walls of neighbouring cells, each cell being composed of one or more rectangular metal plates formed, by bending and/or melted metal sealing, into a hollow stem having walls disposed to form a prismatic surface and being equipped at its lower part with a base (8, 14) capable of supporting a nuclear fuel assemblage, the metal plates which form the cell protruding outwardly from said prismatic surface at at least two locations of its contour while forming at these locations projections (4, 26) against which the neighbouring cells are applied and attached, one or more of said projections which equip the cells being each located at the junction of two neighbouring faces of a cell, characterised in that the two neighbouring faces are formed by bending a single metal plate, the zone of junction between these neighbouring faces comprising a lobe (17, 19, 22, 26) directed outwardly to abut a neighbouring cell, the group of cells formed directly together by known means forming a self-supporting structure in which each cell is attached to the nearest cells of its own row and of the neighbouring rows.

2. Storage rack according to claim 1, characterised in that one or more of the said projections with which the cells are provided are located each along a vertical edge where two panes of metal plate which form neighbouring faces of a cell are attached by melted metal sealing, one of these panes of metal plate forming one of the said projections by being extended, beyond the line of the melted metal sealing, to abut a neighbouring cell.

3. Storage rack according to claim 1, characterised in that one or more of the said projections with which the cells are provided are located each at the junction of two neighbouring faces of a cell formed by two panes of metal plate attached by melted metal sealing, a first pane of metal plate (16) being extended beyond the edge of the said prismatic surface to abut a neighbouring cell, the edge of the second pane of metal plate (31) being bent, with a large radius of curvature towards the exterior of the cell, thus rejoining the edge of the first pane of metal plate, the edges of the two panes of metal plate being joined by a melted metal sealing (33).

4. Storage rack according to any of the preceding claims, characterised in that the said cells are designed to contain nuclear fuel assemblages having a square section, each cell consisting in a hollow stem having walls disposed following the lateral faces of a right prism having a square base.

5. Storage rack according to claim 4, characterised in that each cell is composed of two angles of metal plate (15, 16), assembled together by melted metal sealing, each of these two angles having a pair of wings of equal length, one of the two angles having, however, wings which are longer than those of the other angle, these longer wings extending thus beyond the line or the melted metal sealing to abut a neighbouring cell.

6. Storage rack according to claim 4, characterised in that each cell is composed of two identical angles of metal plate (18), assembled together by melted metal sealing and having each a wing which is longer than the other, these longer wings extending thus beyond the line of the melted metal sealing, to abut a neighbouring cell.

7. Storage rack according to claim 4, characterised in that each cell is composed of:

a profile of metal plate (21) having a cross-section in the form of a U, forming three faces of said cell, the zones of junction between these faces comprising a lobe (22) directed outwardly from the cell to abut a neighbouring cell, and

a plane metal plate (23) melted metal sealed between the wings of the said U-shaped profile, forming the fourth face of the said cell, each wing of the U-shaped profile being prolonged beyond the line of the melted metal sealing, to abut a neighbouring cell.

8. Storage rack according to claim 4, characterised in that each cell is comprised of a single metal plate (25) bent to form the four faces of the cell, each zone of bending comprising a lobe (26) directed outwardly from the cell to about one or more neighbouring cells, the melted metal sealing (3) being made at one of the vertical edges of the cell, one of the two panes of metal plate joined by said melted metal sealing being prolonged beyond the line of melted metal sealing, to abut a neighbouring cell.

9. Storage rack according to any of the preceding claims, characterised in that the cells forming it are made of metal plates of stainless steel containing boron.

10. Storage rack according to any of the preceding claims, characterised in that the cells forming it are made of metal plates of stainless steel coated with a layer of neutron absorbing compound.

11. Storage rack according to any of the preceding claims, characterised in that plates, sheets or similar screens, made of a neutron absorbing material, are placed in a removable way in the spaces which are provided between the walls of neighbouring cells, or at least in some of said spaces.

**Patentansprüche**

1. Gestell zur Lagerung von Kernbrennelementenbündeln mit polygonalem Querschnitt, die in einer Lagerumfriedung angeordnet werden können, bestehend aus mehreren Lagerzellen aus Rohren mit einem an den Querschnitt der Bündel angepassten Querschnitt, wobei die Zellen nach einem regelmässigen, aus parallelen Zellenreihen gebildeten Schema Seite an Seite unter Belassung von Zwischenräumen zwischen den Wänden benachbarter Zellen aufgestellt sind und jede Zelle weiter aus einem oder mehreren gebogenen und/oder derart geschweissten, rechteckförmigen Blechen besteht, dass ein Rohr mit eine prismatische Oberfläche bildenden Wänden geformt wird und dieses in seinem unteren Bereich eine Auflage (8, 14) zum Abstützen eines Kernbrennelementenbündels aufweist, wobei die die Zellen bildenden Bleche in Richtung auf die Aussenseite dieser prismatischen Oberfläche an mindestens zwei vor deren Stellen unter Bildung von Randleisten (4, 26) an diesen Stellen sich nach aussen spreizen, wobei benachbarte Zellen an diese angelehnt und befestigt sind, wobei eine oder mehrere dieser Randleisten, mit denen die Zellen versehen sind, jeweils an der Verbindung zweier benachbarter Seiten einer Zelle angeordnet sind, dadurch gekennzeichnet, dass die beiden benachbarten Seiten durch die Biegung eines gleichen Bleches gebildet sind, die Verbindungszone zwischen den beiden benachbarten Seiten eine nach der Aussenseite der Zelle bis zu einer benachbarten Zelle gerichtete Ausbuchtung (17, 19, 22, 26) aufweist und die Gesamtheit der Zellen durch an sich bekannte Mittel unmittelbar unter Bildung einer sich selbst tragenden Konstruktion miteinander verbunden ist, in der jede Zelle mit den Zellen der eigenen oder benachbarten Reihe verbunden ist.

2. Gestell zur Lagerung nach Anspruch 1, dadurch gekennzeichnet, dass eine oder mehrere der Randleisten, mit denen die Zellen versehen sind, jeweils längs einer vertikalen Kante verlaufen, an der zwei Blechflächen, die die benachbarten Seiten einer Zelle bilden, durch Schweissen miteinander verbunden sind, und eine dieser Blechflächen dadurch, dass sie sich über die Schweissnaht hinaus bis zu einer Nachbarzelle erstreckt, eine dieser Randleisten bildet.

3. Gestell zur Lagerung nach Anspruch 1, dadurch gekennzeichnet, dass eine oder mehrere der Randleisten, mit denen die Zellen versehen sind, jeweils an der Verbindung von zwei aneinander anstossenden Seiten einer Zelle angeordnet sind, wobei diese Seiten aus zwei durch Schweissen miteinander verbundene Blechflächen gebildet sind, eine erste Blechfläche (16) über die Kante der besagten prismatischen Oberfläche hinaus bis zu einer Nachbarzelle verlängert ist, der Rand der zweiten Blechfläche (31) mit grossem Krümmungsradius in Richtung auf die Aussenseite der Zelle gebogen ist und damit den Rand der ersten Blechfläche wieder anschliesst und die Ränder der beiden Blechflächen durch Schweissen (33) miteinander verbunden sind.

4. Gestell zur Lagerung nach irgendeinem der vorhergehenden Ansprüche, dadurch gekennzeichnet, dass die Zellen zur Aufnahme von Kernbrennelementenbündeln mit viereckigem Querschnitt bestimmt sind und jede Zelle aus einem Rohr besteht, dessen Wände gemäss den Seitenflächen eines geraden Prismas mit viereckigem Grundriss verlaufen.

5. Gestell zur Lagerung nach Anspruch 4, dadurch gekennzeichnet, dass jede Zelle aus zwei miteinander durch Schweissen verbundenen Winkelblechen (15, 16) besteht, jeder der beiden Winkel aus zwei Schenkeln gleicher Länge besteht, einer der beiden Winkel trotzdem längere Schwenkel als der andere aufweist und die längsten Schenkel sich damit über die Schweisslinie hinaus bis zu einer Nachbarzelle erstrecken.

6. Gestell zur Lagerung nach Anspruch 4, dadurch gekennzeichnet, dass jede Zelle aus untereinander durch Schweissen miteinander verbundenen identischen Winkelblechen (18) besteht und jede einen längeren Schenkel als die andere aufweist und diese längsten Schenkel sich über die Schweisslinie hinaus bis zu einer Nachbarzelle erstrecken.

7. Gestell zur Lagerung nach Anspruch 4, dadurch gekennzeichnet, dass jede Zelle besteht aus:

einem U-Querschnitt aufweisenden und drei Seiten dieser Zelle bildenden Blechprofil (21), wobei die Verbindungszonen zwischen diesen Seiten eine auf das Äussere der Zelle bis zur Nachbarzelle gerichtete Auswölbung (22) aufweisen, und

einer zwischen den Schenkeln des U-Profiles eingeschweissten Blechfläche (23), die die vierte Seite der Zelle bildet, und jeder Schenkel des U-Profiles über die Schweisslinie hinaus bis zu einer Nachbarzelle verlängert ist.

8. Gestell zur Lagerung nach Anspruch 4, dadurch gekennzeichnet, dass jede Zelle aus einem einzigen, in die Form ihrer vier Seiten gebogenen Blech (25) besteht, jede Biegezone eine auf die Aussenseite der Zelle bis zu einer oder mehreren Nachbarzellen gerichtete Ausbuchtung (26) aufweist, die Schweissung (3) an einer der vertikalen Kanten der Zelle ausgeführt ist und eine der durch diese Schweissung miteinander verbundenen beiden Blechflächen über die Schweissung hinaus bis zu einer Nachbarzelle verlängert ist.

9. Gestell zur Lagerung nach irgendeinem der vorhergehenden Ansprüche, dadurch gekennzeichnet, dass die es bildenden Zellen aus rostfreien Borstahlblechen hergestellt sind.

10. Gestell zur Lagerung nach irgendeinem der vorhergehenden Ansprüche, dadurch gekennzeichnet, dass die es bildenden Zellen aus rostfreien Stahlblechen hergestellt sind und diese mit einer Schicht aus einer neutrophagen Zusammensetzung überzogen sind.

11. Gestell zur Lagerung nach irgendeinem der vorhergehenden Ansprüche, dadurch gekennzeichnet, dass Platten, Folien oder gleichartige Schirme, die aus einem neutrophagen Material bestehen, herausnehmbar in die Räume zwischen den Wänden benachbarter Zellen oder in bestimmte dieser Räume eingesetzt sind.

0 023 742

Fig.3.

Fig.1.

Fig.4.

Fig.2.

0 023 742

Fig.5.

Fig.12.

Fig.9.

Fig.6.

Fig.8.

Fig.7.

## Fig.10.

## Fig.11.